# EUROPEAN PATENT APPLICATION

(11) **EP 4 693 156 A1**
(43) Date of publication of application: **11.02.2026**
(21) Application number: 24778587.6
(22) Date of filing: 19.01.2024
(51) Int. Cl.: G06Q 50/06

(54) **WATER LEAKAGE INVESTIGATION PLANNING ASSISTANCE SYSTEM AND METHOD**

(30) Priority: 24.03.2023 JP 2023048636
(71) Applicant: Tenchijin, Inc., Tokyo 103-0027 (JP)
(72) Inventor: AIHARA Yuhei, Tokyo 103-0027 (JP); INOUE Shin, Tokyo 103-0027 (JP); KOBAYASHI Taichi, Tokyo 103-0027 (JP); SHIBATA Yuto, Tokyo 103-0027 (JP); MIYAZAKI Mayumi, Tokyo 103-0027 (JP)
(74) Representative: Mewburn Ellis LLP
(86) International application number: PCT/JP2024/001494
(87) International publication number: WO 2024/202441

(57) **Abstract**

The present invention assists effective planning of an investigation/repair management plan for waterworks. The present invention is a water leakage investigation planning assistance system that is characterized by including: a water leakage occurrence level analysis unit that calculates water leakage occurrence levels, indicating the probability of water leakage at water pipes within a designated area and presenting the water leakage occurrence levels to an investigation planner; and an investigation priority level analysis unit that uses investigation priority items set by the investigation planner to calculate priority levels for investigation between the water pipes within the area. Provided is a water leakage investigation planning assistance method that involves making a computer perform: water leakage occurrence level analysis processing that calculates water leakage occurrence levels indicating the probability of water leakage at water pipes within a designated area and presenting the water leakage occurrence levels to an investigation planner; and investigation priority level analysis processing that uses investigation priority items set by the investigation planner to calculate priority levels for investigation between the water pipes within the area.

## Description

### TECHNICAL FIELD

The present invention relates to a water leakage investigation planning support system and method.

### BACKGROUND ART

For example, Patent Document 1 (JP 2015-94665 A) discloses a water leakage investigation planning method, which generates a prediction model for predicting changes in water leakage amount in an area based on at least one piece of information among water leakage information, pipeline information, and investigation/repair information, generates a predicted water leakage amount information for the area based on the prediction model information, and designs a water leakage investigation plan that determines the execution order in which water leakage investigations are to be carried out in multiple areas based on the predicted leakage amount information. In this patent document, the predicted water leakage amount information is generated based on both the expected value and uncertainty of the predicted water leakage amount, and the water leakage investigation plan is formulated by using a calculated water leakage cost.

However, in Patent Document 1, the estimation of the presence and amount of water leakage relies on the measurement information of the water flow rate obtained from measuring devices, such as flow meters installed in the water pipe network. Therefore, it is assumed that the measuring devices are installed in the water pipe network, and, for example, due to reasons such as the lack of shared measurement data among multiple regions, the target area of the survey plan may be constrained to a relatively small region. Therefore, there still remains the challenges as to efficient designing of investigation and repair/management plans for water infrastructure.

### PRIOR ART DOCUMENT

### PATENT DOCUMENT

Patent Document 1: JP 2015-94665 A

### SUMMARY OF THE INVENTION

### PROBLEM TO BE SOLVED BY THE INVENTION

Accordingly, the present invention aims to support the efficient planning of investigation/repair management plans for waterworks facilities.

### MEANS TO SOLVE THE PROBLEMS

In order to solve the aforementioned problems, a first embodiment of the present invention provides a water leakage investigation planning support system, comprising:
a water leakage occurrence level analysis unit that calculates water leakage occurrence levels which indicate the probability of leakage in water pipes within a designated area, and presents it to an investigation planner; and
an investigation priority level analysis unit that calculates the priority of investigation between water pipes within the designated area using investigation priority items set by the investigation planner.

In this water leakage investigation planning support system, it is preferable that the water leakage occurrence level analysis unit executes the following processes for each water pipe in the designated area:
a process of applying the pipeline data and buried environment data of the relevant water pipe to a predetermined classification model to generate the buried environment and pipeline classification data that indicates which group of pipelines and buried environments the water pipe belongs to, each with different risk characteristics; and
a process of applying the buried environment and pipeline classification data generated for the relevant water pipe, the repair history data of the relevant water pipe, the leakage history data of the relevant water pipe, and the optical satellite data obtained from a satellite capturing the ground surface including the designated area are applied to a predetermined deterioration estimation model to estimate the deterioration of the water pipe; and
a process of applying the estimated deterioration for the relevant water pipe and synthetic aperture radar (SAR) satellite data obtained by photographing the ground surface including the designated area from a satellite to a predetermined state change extraction model, thereby generating the water leakage occurrence level for the relevant water pipe.

In the water leakage investigation planning support system of the present invention, it is preferable that
the investigation priority level analysis unit executes the following processes:
a process in which, for each water pipe within the designated area, the water supply population, supply volume, and distribution area of the relevant water pipe are applied to a predetermined water leakage impact estimation model, to generate the water leakage impact data which indicates the level of impact of a leak from the relevant water pipe; and
a process in which, for each water pipe within the designated area, the set investigation priority items, the water leakage impact level data output, the water leakage investigation cost data, and the repair management plan/performance data for the relevant water pipe are all applied to a predetermined investigation priority level estimation model, thereby generating e the priority of the investigation among the water pipes within the designated area.

Further, in the water leakage investigation planning support system of the present invention, it is preferable that
the classification model is a statistical model that represents the relationship between the pipeline characteristics and buried environment of the water pipe and the classification indicating the risk characteristics of the relevant water pipe.

Further, in the water leakage investigation planning support system of the present invention, it is preferable that
the deterioration estimation model is a machine learning model that learns the relationship between the buried environment and pipeline classification data, repair history data, water leakage history data, and optical satellite data of the water pipe, and the deterioration of the relevant water pipe, and inputs the buried environment and pipeline classification data, repair history data, water leakage history data, and optical satellite data of the relevant water pipe and outputs the estimated data of the deterioration of the relevant water pipe.

Further, in the water leakage investigation planning support system of the present invention, it is preferable that
the state change extraction model measures the moisture level and ground displacement around the water pipe from the synthetic aperture radar satellite data at a first time point and a second time point, and detects abnormal patterns that differ from normal patterns based on the measured moisture level and ground displacements.

Further, a second embodiment of the present invention provides a water leakage investigation planning assistance method which involves making a computer execute the following processes:
a water leakage occurrence level analysis process, which calculates the water leakage occurrence levels indicating the likelihood of water leakage in water pipes within a designated area, and presents its to an investigation planner; and
an investigation priority level analysis process, which calculates the priority of investigation among water pipes within the designated area using investigation priority items set by the investigation planner.

In this water leakage investigation planning support system, it is preferable that
the water leakage occurrence level analysis unit includes the following processes for each water pipe in the designated area:
a process in which, the pipeline data and buried environment data of the relevant water pipe are applied to a predetermined classification model, to generate the buried environment and pipeline classification data indicating to which group of pipelines and buried environments with different risk characteristics the relevant water pipe belongs to;
a process in which, the buried environment and pipeline classification data, the repair history data, the leakage history data of the relevant water pipe, and the optical satellite data capturing the ground surface including the designated area are applied to a predetermined deterioration estimation model to estimate the deterioration of the relevant water pipe; and
a process in which, the estimated deterioration for the relevant water pipe and synthetic aperture radar satellite data capturing the ground surface including the designated area are applied to a predetermined state change extraction model, thereby generating the water leakage occurrence level for the relevant water pipe.

### EFFECTS OF THE INVENTION

According to the present invention, it is possible to support the design of investigation/repair management plans for the water infrastructure.

### BRIEF EXPLANATION OF DRAWINGS

[FIG. 1] is a block diagram showing the overall configuration of system 1, according to the embodiment of the present invention.
[FIG. 2] is a block diagram showing the hardware configuration of computer 100, constituting the water leakage investigation planning support system 10, investigation planner's terminal 20, and investigator's terminal 30.
[FIG. 3] is a flowchart showing the processing procedure from the planning and deciding of the investigation to the registration of the water leakage investigation results.
[FIG. 4] is a flowchart showing the analytical procedure of the water leakage occurrence level.
[FIG. 5] is a flowchart showing the analytical procedure of the investigation priority level.
[FIG. 6A] is a diagram showing an example of a selection screen for the target investigation area.
[FIG. 6B] is a diagram showing an example of a screen display of the water leakage level.
[FIG. 6C] is a diagram showing an example of a selection screen for the investigation priority items.
[FIG. 6D] is a diagram showing an example of a screen display of the water leakage investigation priority level.
[FIG. 6E] is a diagram showing an example of a screen display for the selecting investigation candidates and the investigation distance/period/cost.
[FIG. 6F] is a diagram showing an example of a display screen including the partially filled list of investigation candidates.

### MODES FOR CARRYING OUT THE INVENTION

In the following, representative embodiments of the water leaking investigation planning support system and method will be described in detail with reference to the drawings. Note that the present invention is not limited to these drawings. Furthermore, since these drawings are intended to explain the concept of the present invention, and therefore, for ease of understanding, sizes, ratios, and numbers may be exaggerated or simplified as necessary

### 1. Overall System Configuration

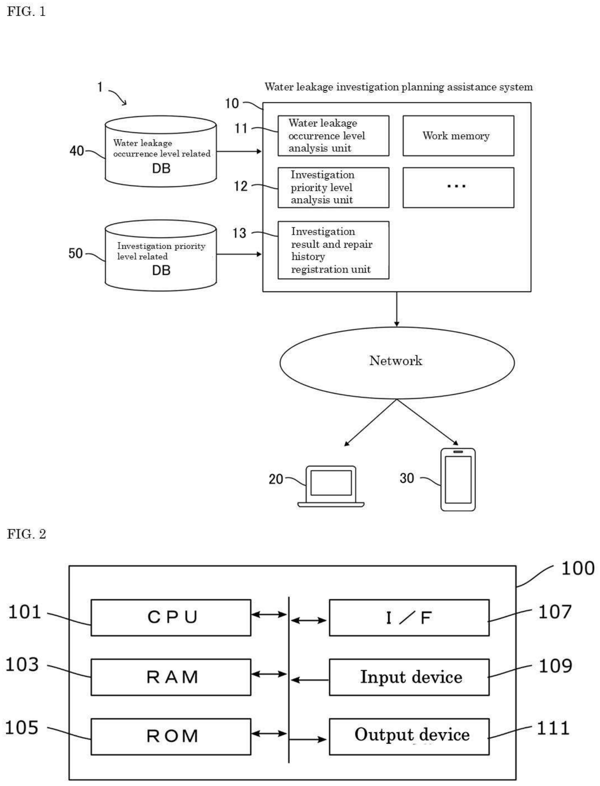

As shown in FIG. 1, system 1 is configured by including a water leakage investigation planning support system 10 (hereinafter sometimes referred to as the support system), investigation planner's terminal 20, investigator's terminal 30, a water leakage occurrence level related database 40 (DB), and an investigation priority-related database 50 (DB).

The support system 10 is a computer system which supports the formulation of the water leakage investigation plan of the water pipe and implementation of the plan by an investigation planner, such as a waterworks supplier. Here, the water pipes may include either or both the pipe constituting a water supply system and the pipe constituting a sewerage system.

The support system 10 is communicably connected to the investigation planner's terminal 20and the investigator's terminal 30 via a wired or wireless communication network.

Additionally, the support system 10 is communicatively connected to the water leakage occurrence level-related DB 40 and the investigation priority level-related DB 50.

The leakage occurrence level-related DB 40 stores, for example, the following data:
- Repair history data
- Leakage history data
- Pipeline data ...such as pipe material, years of service, etc.
- Buried environment data ...such as topography, geology, soil, buried soil, slope, etc.
- Optical satellite data ... such as meteorological data (e.g. ground surface temperature, precipitation), optical images, digital elevation model (DEM) data, etc.
- Synthetic aperture radar (SAR) satellite data ... such as ground movement, moisture content, etc.

The repair history data, water leakage history data, and pipeline data are mainly provided by the waterworks suppliers, and the optical satellite data and SAR satellite data are mainly provided by the satellite operators.

Further, the investigation priority level-related DB 50 stores, for example, the following data:
- Water supply population/water supply volume
- Water supply area
- Water leakage investigation cost
- Repair management plan/result

The data recorded in the investigation priority level-related DB 50 is mainly provided by waterworks suppliers.

The water leakage occurrence level-related DB 40 and the investigation priority level-related DB 50 may be included in the support system 10, or they may be a computer or storage device (e.g., a server) separate from the support system 10. Further, each of the water leakage occurrence level-related DB 40 and the investigation priority level-related DB 50 may be implemented as one computer or storage device, or may be implemented as multiple computers or storage devices.

### 1-2. Hardware Configuration of Computer 100

As shown in FIG. 2, the computer 100 that constitutes the support system 10, the investigation planner's terminal 20, and the investigator's terminal 30 are equipped with various hardware components such as CPU 101, RAM 103, ROM 105, communication interface 107, input device 109, and output device 111. The computer 100 may be configured as a single unit or as multiple units. Examples of the computer 100 include desktop, laptop or tablet-style computers, smartphones, and PDAs (Personal Digital Assistant), but are not limited thereto.

The CPU 101 is an electronic circuit that reads various data and programs from the ROM 105 into the RAM 103 and executes them to realize various functions. For example, in the computer 100 constituting the support system 10, the CPU 101 functions as the water leakage occurrence level analysis unit, investigation priority level analysis unit, and investigation result and repair history registration unit, which will be described later.

The ROM 105 is a non-volatile memory, such as a hard disk drive, solid-state drive, or flash memory, that stores various data and programs.

The communication interface 107 is an interface for connecting to a communication network, and includes, for example, an adapter for connecting to Ethernet (registered trademark), a modem for connecting to a public telephone line network, a wireless communication device for wireless communication, or connectors for serial communication such as a USB (Universal Serial Bus), an RS232C, or the like.

The input device 109 is for inputting data, and includes, for example, a keyboard, mouse, touch panel, buttons, microphone, and the like.

The output device 111 is for outputting data, and includes, for example, a display, printer, speaker, and the like.

### 2. Software Configuration of Water Leakage Investigation Planning Support System 10

As shown in FIG. 1, the water leakage investigation planning support system 10 is composed of a water leakage occurrence level analysis unit, an investigation priority level analysis unit, and an investigation result/repair history registration unit.

Below, these components will be explained in their respective order.

### 2-1. With respect to Water Leakage Occurrence Level Analysis Unit

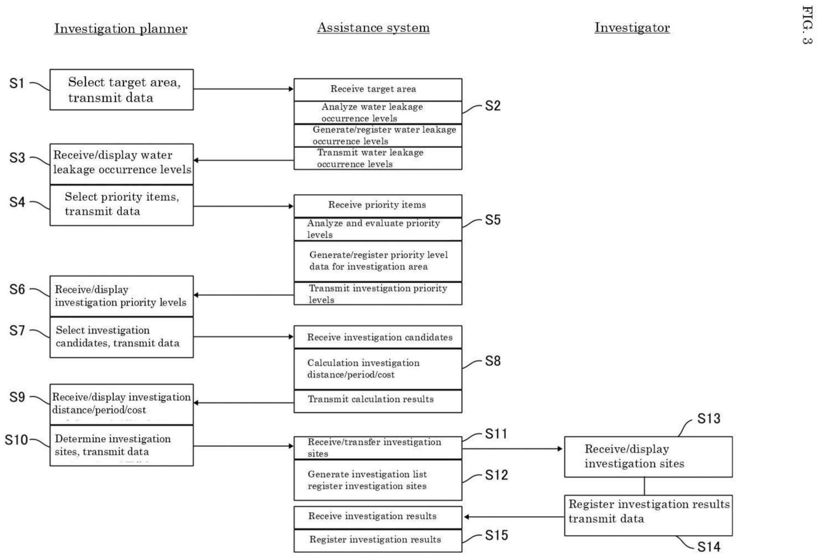

The water leakage occurrence level analysis unit calculates the water leakage occurrence level in the pipelines within the investigation target area using the pipeline data and buried environment data in the area selected or set by the investigation planner (see FIG. 3). Here, the water leakage occurrence level is an index indicating the fact that water leakage is occurring from the relevant pipeline or the probability that water leakage will occur, and may be expressed, for example, as a four-level numerical value or as a percentage.

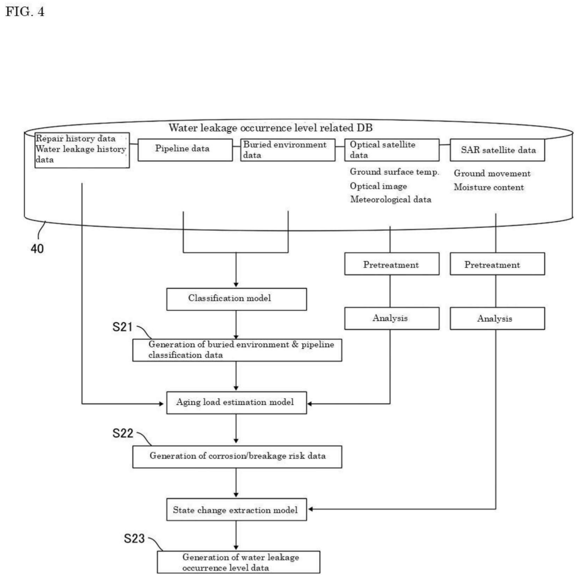

Specifically, the water leakage occurrence level analysis unit applies the relevant water pipe's pipeline data and buried environment data to a clustering model (or classification model) to generate the buried environment and pipeline classification data (see FIG. 4). This function may also be referred to as the classification unit.

Here, any known clustering model can be used, for example, a hierarchical method such as the shortest distance method, or a non-hierarchical method such as the k-means method, or an alternatively, a neural network such as the logistic regression, random forest or the like may be used. Thereby, it is possible to generate groups of pipelines and buried environments having different risk profiles (risk characteristics) by using the pipeline data and buried environment data. For example, the group or classification to which a relevant pipeline belongs is determined by a combination of the pipeline material, pipeline age, soil conditions, and water distribution area.

Further, the water leakage occurrence level analysis unit also applies to a deterioration estimation model, not only the buried environment and pipeline classification data calculated by the aforementioned classification unit but also repair history data, leakage history data, and optical satellite data, and estimates the deterioration. This function may also be called the agingdeterioration estimation unit.

Here, the deterioration estimation model estimates the deterioration by learning the time-series data of stress factors on the pipelines observed by satellites, using repair history and/or water leakage history as the objective variables for each label assigned by the classification unit. This model generates the corrosion and damage risk data for each pipeline.

In other words, the model identifies factors affecting the rate of deterioration and corrosion of water pipes for each pipeline and buried environment group, and uses these factors to predict the future risk of water leakage.

The deterioration output from the deterioration estimation unit may be classified into stages, for example, A, B, C, D ..., or may be expressed in terms of the number of years, such as X years, or as a score.

Time-series data observed by the satellites include the earth surface temperature, meteorological data (precipitation and air temperature), and optical images.

Regarding ground surface temperature, the deterioration of pipelines due to temperature differences, expansion/damage of pipelines due to freezing, and deterioration of pipelines due to high temperatures are each variables for the deterioration.

Among the meteorological data, the air temperature correlates with the flow rate of water passing through a pipeline (e.g., a water supply pipe), and precipitation correlates with the amount of water (e.g., rainwater) passing through a pipeline (e.g., a drainage pipe), and thus each serve as a variable related to the stress within the relevant pipeline.

The optical images serve as variables related to land cover and population density, such as the distribution of rice paddies/farmlands, cities, and major roads on the ground surface.

Learning methods include, for example, decision trees, regression analysis, neural networks, random forests, and the like, but are not limited thereto.

Regardless of which learning model is used, it is sufficient to generate the deterioration estimation model by using the buried environment and pipeline classification data, the repair history data, water leakage history data, the optical satellite data, and the like as explanatory variables, and the deterioration as the objective variable.

In addition, when using decision trees and random forests, for example, the data may be branched based on criteria, for example, the chi-square statistic, Gini coefficient, or mean information content (entropy). In the case of random forests, predictions can be made by a plurality of decision trees learned in parallel, and the final output is determined by majority vote or averaging.

For regression analysis, the regression coefficients in the regression equation may be determined by methods such as the least squares, or the like.

For neural networks, the learning can be achieved by adjusting the weights of the connections between the input layer, output layer, and hidden layers in their intermediate, by methods such as backpropagation.

Furthermore, the water leakage occurrence level analysis unit applies SAR satellite data, in addition to the corrosion/breakage risk (deterioration) data estimated by the deterioration estimation unit, and the state change extraction model to generate the water leakage occurrence level. This function may also be referred to as the water leakage occurrence level calculation unit.

The state change extraction model extracts the anomalies in the amount of moisture and ground displacement on the ground surface. That is, among the areas identified to be at high-risk based on the corrosion/damage risk data, the water leakage occurrence level is generated based on the state change model.

Specifically, the state change extraction model evaluates the possibility of water leakage by detecting changes in the road surface through the image analysis and the changes along the time-axis.

Any suitable anomaly detection or outlier investigation method can be used. Examples include methods using Z-scores outlier investigation algorithms, change-point detection algorithms, machine learning-based approaches, and rule-based methods.

Here, the SAR is an active sensor that transmits microwaves from an antenna and observes the backscattered signals from the Earth's surface..

Anomalies in the ground displacement can be extracted by calculating the phase difference between the SAR data observed at least twice over the target location. By analyzing the difference across the observation period, surface displacement over a designated area can be spatially assessed, a method known as time-series interferometric SAR (InSAR) analysis. Further, anomalies in the moisture levels can be extracted by analyzing the time-series data of backscattering coefficients from at least two SAR observations over the target location. These backscatter coefficients may include multiple polarizations, and data from multiple satellites operating at different frequencies in different bands may also be used.

The water leakage occurrence level may be expressed, for example, in four stages ranging from low to high, as a percentage, or as a numerical score.

### 2-2. With respect to Investigation Priority Level Analysis Unit

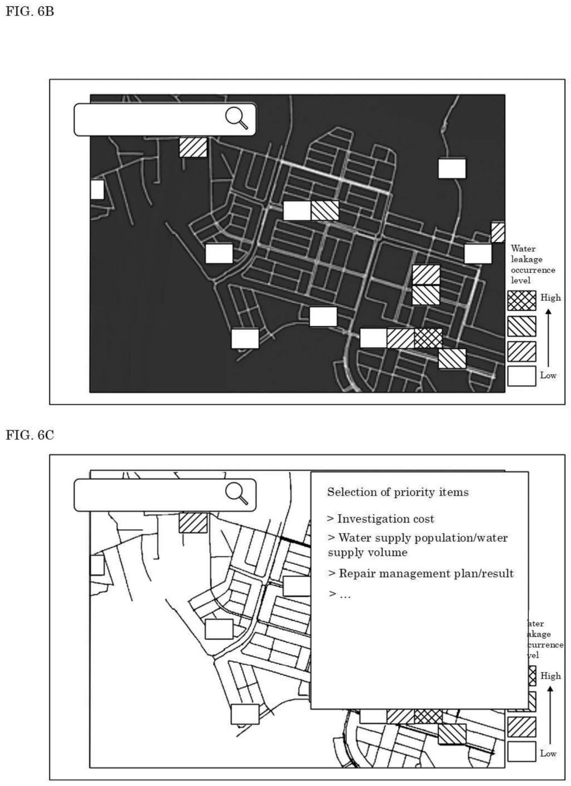

The investigation priority level analysis unit generates priority data for the investigation area by using the priority items selected or set by the investigation planner (see FIG. 3). Here, the priority level is an index showing which of the pipelines in the investigation target area should be investigated first. It may, for example, be expressed using a four-stage numerical value or as a percentage. Further, priority items may include, for example, the investigation cost, water supply population and volume, repair plan and result, and the like (see FIG. 6C).

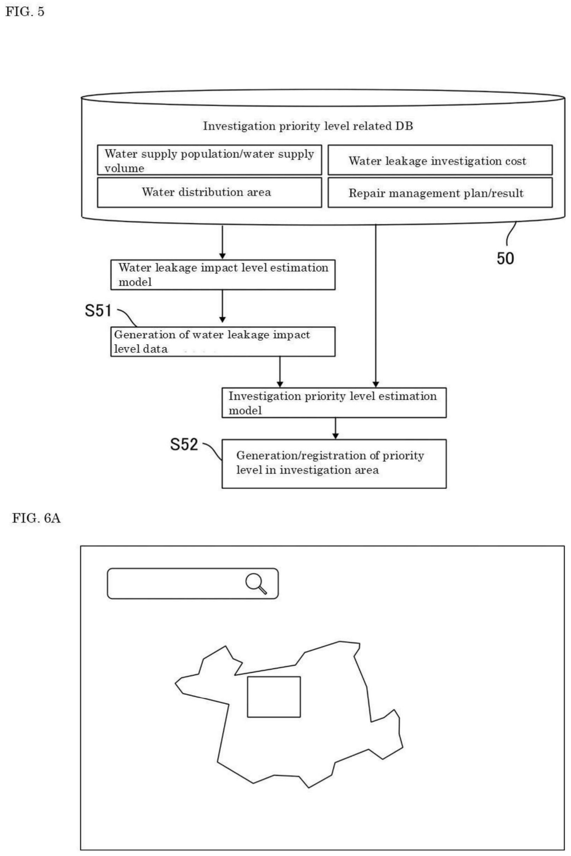

The investigation priority level analysis unit generates the priority level data by using the water leakage impact level estimation model (see FIG. 5).

The water leakage impact level estimation model is a statistical model that takes as inputs the water supply population/water supply volume, distribution area of the relevant water pipe, and outputs the water leakage impact level data for that relevant water pipe.

Here, the water leakage impact level is an index showing the extent to which the water leakage would affect neighboring residents, government entities, and the like, and may be expressed, for example, in four stages from low to high, as a percentage, or as a score.

The water leakage impact level estimation model calculates the extent of damage (for example, damage cost) caused by a leakage in the relevant pipeline by aggregating the water supply population and water supply volume of the relevant pipeline in a preset evaluation unit (area, distribution area, and the like), or by inputting the pipeline's water supply population and water supply volume into a predetermined relational equation. Here, the predetermined relational equation may be, for example, water supply volume x road traffic volume (to evaluate the impact on traffic and living infrastructure in the area where water leakage damage occurred), water supply volume x land cost (to evaluate the damage cost to buildings caused by water leakage damage), or alternatively, a trained neural network model may also be used.

Further, the investigation priority level analysis unit generates investigation priority from the investigation priority level estimation model by using the water leakage impact level data output as described above (see FIG. 5).

That is, the investigation priority level estimation model takes as input the aforementioned water leakage impact level data, as well as the water leakage investigation cost and repair management plan/result data, and outputs the investigation priority level.

Here, the water leakage investigation cost data indicates the estimated (or actual) cost required for investigating the water leakage in the relevant pipeline. Further, the repair management plan/result data indicates the repair schedules and actual repair records related to the relevant pipeline, and may include, for example, the year in which repair is scheduled and the details of the repair.

Further, the investigation priority level may be assigned, for example, as a rank of 1, 2, ... in descending order of priority level, or in stages such as high/medium/low, or as a score.

The investigation priority level estimation model (also referred to as the investigation priority level estimation program) determines the priority level by either applying predetermined weights to each input evaluation item (for example, the water leakage impact level data or the water leakage investigation cost data) and summing them, or by excluding/including evaluation items based on threshold values (for example, evaluating only pipelines with the risk of 4 or higher, or excluding areas that have already been investigated and repaired).

If the budget for water leakage investigation is limited, a cost or area constraint may be set to allow the investigation of as many pipelines as possible within the investigation budget. For example, if the investigation cost of the relevant pipeline exceeds the upper limit, the model may proceed by treating the pipeline's investigation as being equal to that cap when determining the priority level..

The generated priority level data is registered in the support system 10.

### 2-3. With respect to Investigation Result/Repair History Registration Unit

The investigation result/repair history registration unit receives and records the investigation results and repair history from terminal 30 of the investigator.

The investigation result/repair history registration unit may transfer the received investigation result and repair history to the investigation planner's terminal 20.

### 3. Operation of Water Leakage Investigation Planning Support System 10, and the like

The operation of the entire system, including the support system 10, will be explained with reference to FIG. 3 to FIG. 6.

In response to a request from the investigation planner's terminal 20, the support system 10 displays a selection screen (map screen) for the investigation target area on the investigation planner's terminal 20. FIG. 6A shows an example of the selection screen displayed on the investigation planner's terminal 20.

When the investigation target area is selected on the investigation planner's terminal 20, the selection data of the investigation target area is transmitted from the terminal to the support system 10 (step S1 in FIG. 3).

When the support system 10 receives the selection data of the investigation target area, it analyzes the various data in the water leakage occurrence level related DB 40, and generates and registers the water leakage occurrence level (water leakage risk) data for the selected area (step S2).

Specifically, as shown in FIG. 4, the support system 10 generates the buried environment and pipeline classification data by inputting the pipeline data and buried environment data of the water pipes belonging to the selected area into a classification model (step S21). Next, the support system 10 generates the corrosion/damage risk data for the relevant water pipe by inputting the generated buried environment and pipeline classification data, as well as the repair history data, water leakage history data, and optical satellite data for the selected area related to the relevant water pipes into the deterioration estimation model (step S22). Further, the support system 10 generates the water leakage occurrence level data for the relevant water pipe by inputting the obtained corrosion/breakage risk data and the SAR satellite data of the relevant selected area into the state change extraction model (step S23).

Returning to FIG. 3, the support system 10 transmits the obtained water leakage occurrence level data to the investigation planner's terminal 20.

When the investigation planner's terminal 20 receives the water leakage occurrence level data, it displays it on the screen (step S3). FIG. 6B shows an example of the water leakage level screen displayed on the investigation planner's terminal 20. In this figure, labels indicating the water leakage degree, expressed in four stages from high to low, are attached to the relevant locations on the layout of the water pipes belonging to the investigation target area. This allows the investigation planner to easily identify the water pipe that is leaking or have a high probability of leaking, and the locations thereof.

Next, the investigation planner's terminal 20 displays a screen for selecting priority items in the investigation, and allows the investigation planner to make a selection (step S4). FIG. 6C shows an example of the priority item selection screen displayed on the investigation planner's terminal 20.

Examples of the displayed priority items include, for instance, investigation cost, water supply population/volume, repair plan/result, and the like, but are not limited thereto. It is acceptable to select only one priority item, or to select multiple priority items. In the latter case, it is also possible to assign a priority order to the selected multiple items.

Once the priority items are selected, the investigation planner's terminal 20 transmits the data of the selected priority items to the support system 10.

When receiving the selection data of the priority items, the support system 10 analyzes and evaluates the investigation priority levels in the investigation target area and generates and registers the priority level data (step S5 in FIG. 3).

Specifically, as shown in FIG. 5, the support system 10 inputs the water supply population, water supply volume, and distribution area of the relevant water pipe into the water leakage impact level estimation model, to generate the water leakage impact level data (step S51). Next, the support system 10 generates the priority level data for the water pipes belonging to the investigation target area by inputting the obtained water leakage impact level data as well as the water leakage investigation cost data and the repair management plan/result data to the investigation priority level estimation model (step S52).

Returning to FIG. 3, the support system 10 transmits the generated priority level data to the investigation planner's terminal 20.

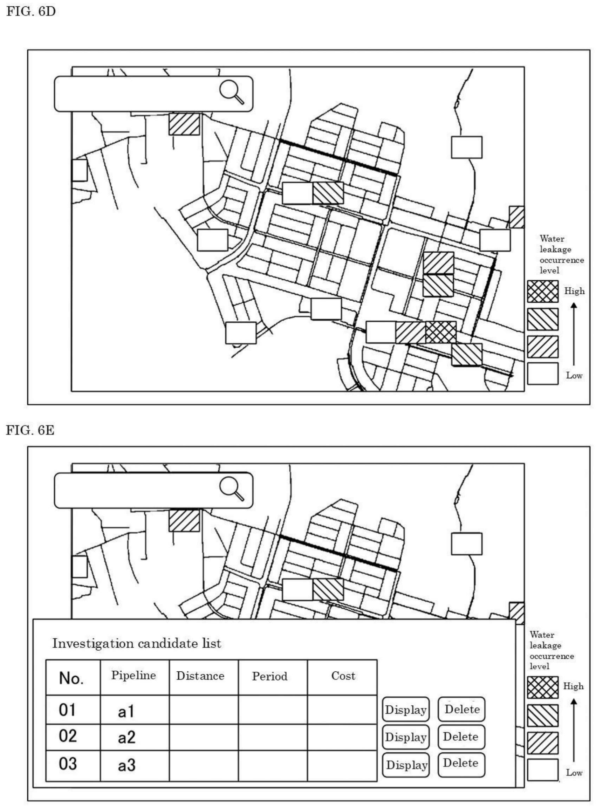

When receiving the priority level data, the investigation planner's terminal 20 displays it on the screen. FIG. 6D shows an example of the priority level data on the investigation planner's terminal 20. In this figure, the labels indicating the priority, expressed in four stages from high to low, are attached to the relevant locations of the layout of the water pipes belonging to the investigation target area. This allows the investigation planner to easily identify which water pipes have a high priority level (or urgency) for investigation, and the locations thereof.

Next, the investigation planner's terminal 20 displays a selection screen for investigation candidates, allowing the investigation planner to make a selection (step S7). FIG. 6E shows an example of a selection screen for investigation candidates displayed on the investigation planner's terminal 20. As shown in the figure, multiple investigation candidates may be displayed. In this case, for example, the water pipes may be listed in order of investigation priority level.

When a particular investigation candidate is selected (when the "Display" button in FIG. 6E is selected), the investigation planner's terminal 20 transmits the selection data of the investigation candidate to the support system 10. Note that, if the "Delete" button in FIG. 6E is selected, the corresponding investigation candidate is deleted from the investigation candidate selection screen.

When receiving the selection data of the investigation candidates, the support system 10 calculates the distance, investigation period, and the investigation cost of the selected water pipe, and transmits the calculation results to the investigation planner's terminal 20 (step S8).

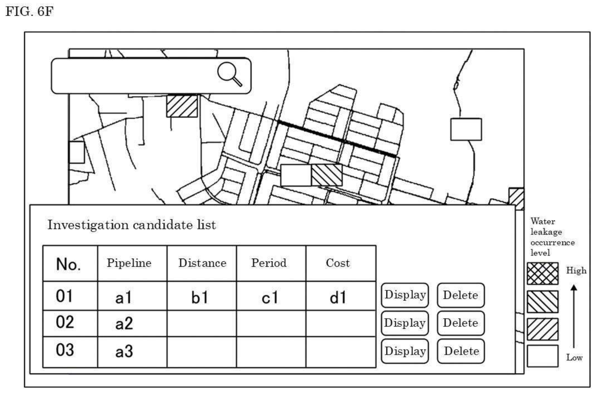

Upon receiving the calculation results, the investigation planner's terminal 20 displays the distance, investigation period, and investigation cost of the corresponding water pipe in the appropriate fields of the investigation candidate list (see FIG. 6E) (step S9). In the example of FIG. 6F, the distance "b1", investigation period "c1", and investigation cost "d1" of the pipeline "a1" are displayed.

Then, when the investigation planner determines (selects) the investigation location (i.e., the water pipe to be investigated), the investigation planner's terminal 20transmits the investigation location data to the support system 10 (step S10).

When receiving the investigation location data, the support system 10 transfers the data to the investigator's terminal 30(step S11). Additionally, the support system 10 generates the investigation list and registers the investigation locations (step S12).

Upon receiving the investigation location data, the investigator's terminal 30 displays the data on the screen (step S13). The investigation location data includes, for example, the water pipe to be investigated, its location, and the contents of the investigation. Accordingly, the investigator can easily grasp the subject and content of the investigation.

When the investigation is completed by the investigator, the investigation results are registered in the investigator's terminal 30. Then, the investigation result registration data is transmitted from the investigator's terminal 30 to the support system 10 (step S14).

Upon receiving the investigation result data, the support system 10 registers the results in the investigation list (step S15). Note that the inputted investigation list may also be transmitted from the support system 10 to the investigation planner's terminal 20.

### 4. Effects of The Present Embodiment

According to the present embodiment, it is possible to efficiently assist the planning and execution of the investigation/repair management plan for water infrastructure.

That is, the overall system,
- enables efficient implementation of the water leakage investigation from the planning to the execution by the water suppliers. Further, even when the investigation area spans a wide range or the investigation area includes water pipes without flow meters, or the like, it remains possible to appropriately formulate an investigation plan.

Furthermore, with respect to the prediction of the water leakage occurrence level:
- it is possible to estimate the freezing risk, high-temperature risk, and aging deterioration of water pipes by using the time-series data from the satellites.
- it is possible to appropriately evaluate the water leakage occurrence level based on the stress on the water pipes and state change estimation information from the satellite. Moreover, the investigation planner can simply select any desired area and display the water leakage risk in that area on a map, easing to identify the situation.
- with input of leak history and deterioration/corrosion information, improved accuracy can be expected year by year.

With respect to the water leakage investigation priority level:
- it is possible to determine, based on the water leakage occurrence level, by considering the impact level in the event of a water leakage (such as water supply population /volume), repair management plans, and recent results of leak investigations, the investigation planner can easily determine the priority level for conducting water leak investigations.

The representative embodiments of the present invention have been described above, but the present invention is not limited thereto, and various design modifications are possible, which are also included within the scope of the present invention.

### EXPLANATION OF SYMBOLS

10 Water leakage investigation planning support system
11 Water leakage occurrence level analysis unit
12 Investigation priority level analysis unit
13 Investigation result/repair history registration unit
20 Termina for investigation planner
30 Terminal for investigator
40 Water leakage occurrence level related database
50 Investigation priority level related database

## Claims

1. A water leakage investigation planning assistance system comprising:
a water leakage occurrence level analysis unit that calculates water leakage occurrence levels indicating the probability of leakage in water pipes within a designated area and presents it to an investigation planner; and
an investigation priority level analysis unit that calculates the priority of investigation among the water pipes in the designated area using investigation priority items set by the investigation planner;
wherein the water leakage occurrence level analysis unit executes the following processes for each water pipe in the designated area:
a process of applying the relevant water pipe's pipeline data and buried environment data to a predetermined classification model, generating the buried environment and pipeline classification data indicating to which group, among groups of pipelines and buried environments having different risk characteristics, the relevant water pipe belongs;
a process of applying the buried environment and pipeline classification data generated for the relevant water pipe, the repair history data of the relevant water pipe, the leakage history data of the relevant water pipe, and the optical satellite data capturing the ground surface including the designated area from a satellite, to a predetermined deterioration estimation model to estimate the deterioration of the relevant water pipe; and
a process of applying the estimated deterioration for the relevant water pipe and synthetic aperture radar satellite data capturing the ground surface including the designated area to a predetermined state change extraction model to generate the water leakage occurrence level for the relevant water pipe.

2. The water leakage investigation planning support system according to claim 1, wherein the investigation priority level analysis unit executes the following processes:
a process of applying, for each of the water pipes in the designated area, the water supply population, water supply volume, and water distribution area of the relevant water pipe to a predetermined water leakage impact level estimation model, and generating water leakage impact level data indicating the degree of impact caused by water leakage from the relevant water pipe; and
a process of applying, for each water pipe within the area, the set investigation priority items, the water leakage impact level data output for the relevant water pipe, the water leakage investigation cost data for the relevant water pipe, and the repair management plan/result data for the relevant water pipe to a predetermined investigation priority level estimation model, generating the priority of the investigation among the water pipes within the designated area.

3. The water leakage investigation planning support system according to claim 1, wherein the classification model is a statistical model, indicating the relationship between the pipeline characteristics and buried environment of the water pipe and a classification indicating the risk characteristics of the relevant water pipe.

4. The leak investigation planning support system according to claim 1, wherein the deterioration estimation model is a machine learning model that learns the relationship between the buried environment and pipeline classification data, repair history data, water leakage history data, and optical satellite data of the water pipe and the deterioration of the relevant water pipe, and receives as inputs the buried environment and pipeline classification data, repair history data, water leakage history data, and optical satellite data of the relevant water pipe, and outputs the estimated data of the deterioration of the relevant water pipe.

5. The water leakage investigation planning support system according to claim 1, wherein the state change extraction model measures the moisture level and ground displacement around the water pipe from the synthetic aperture radar satellite data at a first time point and a second time point, and detects abnormal patterns that differ from normal patterns from the measured moisture level and ground displacement.

6. A water leakage investigation planning assistance method which involves making a computer executes the following processes:
a water leakage occurrence level analysis process that calculates the water leakage occurrence levels indicating the probability of water leakage at water pipes within a designated area and presents the water leakage occurrence levels to an investigation planner; and
an investigation priority level analysis process that uses investigation priority items set by the investigation planner to calculate priority levels for investigation among the water pipes within the designated area;
wherein the water leakage occurrence level analysis unit includes the following processes for each water pipe in the designated area:
a process of applying the relevant water pipe's pipeline data and buried environment data to a predetermined classification model to generate the buried environment and pipeline classification data indicating to which group of pipelines and buried environments, each having different risk characteristics, the relevant water pipe belongs;
a process of applying the buried environment and pipeline classification data generated for the relevant water pipe, the repair history data of the relevant water pipe, the leakage history data of the relevant water pipe, and the optical satellite data capturing the ground surface including the designated area to a predetermined deterioration estimation model to estimate the deterioration of the relevant water pipe; and
a process of applying the estimated deterioration for the relevant water pipe and synthetic aperture radar satellite data capturing the ground surface including the designated area to a predetermined state change extraction model to generate the water leakage occurrence level for the relevant water pipe.
